# FASCICULE DE BREVET EUROPEEN

(11) **EP 2 603 391 B1**
(45) Date de publication et mention de la délivrance du brevet: **02.09.2015**
(21) Numéro de dépôt: 11741615.6
(22) Date de dépôt: 29.06.2011
(51) Int. Cl.: B60K 11/04, F28F 9/00

(54) **DISPOSITIF DE FIXATION D'UN ELEMENT DE FAÇADE DE REFROIDISSEMENT DE VEHICULE AUTOMOBILE TEL QU'UN RADIATEUR (R)**
VORRICHTUNG ZUR FIXIERUNG EIN KÜHLUNGSELEMENT EINES VORDERBAUES EINES KRAFTFAHRZEUGS WIE EIN KÜHLER.
DEVICE FOR FIXING A COOLING ELEMENT FROM A FRONT PART OF A VEHICLE LIKE A RADIATOR

(30) Priorité: 11.08.2010 FR 1056543
(43) Date de publication de la demande: 19.06.2013
(73) Titulaire: Peugeot Citroën Automobiles SA, 78140 Vélizy Villacoublay (FR)
(72) Inventeur: BERRE, Olivier, F-25490 Fesches Le Chatel (FR); VIEIRA, Bruno, F-78000 Versailles (FR)
(74) Mandataire: Laurin, Ghislain Nicolas
(86) Numéro de dépôt international: PCT/FR2011/051515
(87) Numéro de publication internationale: WO 2012/020185

(56) Documents cités:
- EP-A2- 1 106 413
- WO-A1-2011/098381
- DE-A1-102006 056 657
- DE-U1-202004 011 632

## Description

La présente invention concerne un dispositif pour le maintien d'un équipement de véhicule automobile en façade avant tel que la façade de refroidissement qui est un assemblage d'au moins un composant parmi la liste des composants suivant échangeur à eau glycolée (exemple : radiateur de refroidissement), condenseur de climatisation, groupe moto ventilateur, échangeur à air (exemple : refroidisseur d'air de suralimentation), échangeur à huile.

La façade de refroidissement et plus précisément un radiateur de véhicule automobile est généralement situé dans la partie avant du véhicule et est généralement monté sur des traverses par l'intermédiaire de moyens de fixation au moins en partie élastique qui réduisent la transmission des vibrations. Ainsi, le radiateur est généralement maintenu par deux fixations sur une traverse inférieure et deux fixations opposées sur une traverse supérieure.

En cas de choc sur la façade avant du véhicule, le radiateur peut subir une poussée vers l'arrière du véhicule conduisant généralement à un déplacement dudit radiateur vers l'arrière entraînant une rupture des points de fixation et le plus souvent également du radiateur lui-même.

Il est souhaitable que cette façade de refroidissement, ne fasse pas partie du panier des pièces à changer lors d'un choc dit « répa » correspondant à un choc du véhicule contre un obstacle à une vitesse inférieure à 16km/h. Cette façade de refroidissement étant disposée sur l'avant du véhicule, pour ne pas l'endommager, il est envisagée que cette façade recule lors du choc.

Ainsi, de manière à éviter une détérioration du radiateur notamment en cas de choc de faible amplitude, on a proposé différents moyens de fixation autorisant soit une désolidarisation des moyens de fixation sur les traverses soit un déplacement en translation relatif dudit radiateur.

Ainsi, dans EP 1 247 681 est décrit un dispositif de fixation de radiateur monté sur une première pièce telle qu'une traverse et comportant des moyens de réception d'un pion porté par le radiateur à une première position dudit radiateur. Les moyens de réception définissent ainsi un premier logement relié à un second logement par un passage plus étroit, le premier logement définissant la position normale du radiateur tandis que le second logement définit une position dans laquelle peut arriver le pion lorsque le radiateur est déplacé en translation sous l'effet d'une poussée vers l'arrière du véhicule d'amplitude dépassant un seuil déterminé. Les moyens de réception sont constitués d'un élément déformable autorisant le déplacement du pion dans le canal du premier logement au second logement dans une direction privilégiée. On autorise ainsi un recul de course limitée du radiateur par rapport aux traverses le supportant, permettant pour des chocs à faible vitesse d'éviter une détérioration du radiateur ou de ses moyens de fixation.

Dans FR 2 833 539, on a proposé un dispositif de maintien d'un radiateur comprenant au moins un logement dans lequel un pion est reçu de manière à être guidé en translation. Ce logement est notamment défini sous la forme d'une pince élastiquement déformable définissant entre ses branches deux logements, le premier logement correspondant à la position normale du radiateur et le second logement à la position du radiateur après une translation de celui-ci dans une direction privilégiée.

D'autres documents tels que US 2010/0078149, JP2001150962, proposent également des dispositifs de fixation de ce genre.

On a proposé également dans FR 2 931 439, un dispositif de fixation d'un premier élément sur un deuxième élément, comprenant une patte de fixation allongée reliant ces deux éléments, ladite patte présentant un coude permettant de distinguer une portion principale et une portion rabattue de plus faible longueur, lesdites portions étant planes et parallèles entre elles, et ménageant entre elles un espace, ledit premier élément comprenant une embase plane et de faible épaisseur. La principale caractéristique de ce dispositif de fixation est que la portion rabattue est munie d'un ergot de blocage, et en ce que l'extrémité libre de la portion principale présente une butée, le premier élément venant se positionner contre la patte entre la butée et l'ergot de blocage, de sorte que, lors d'un choc sur le premier élément suivant l'axe longitudinal de la patte, l'ergot s'écarte pour permettre au premier élément de se déplacer, et à l'embase de venir occuper l'espace située entre les deux portions de la patte.

Le document DE 20 2004 011 632 U décrit un dispositif selon le préambule de la revendication 1.

Bien que ces dispositifs de fixation permettent un déplacement en translation d'une pièce par rapport à ses supports, il est nécessaire de concevoir une pièce différente en fonction de chaque seuil de poussée au-delà duquel on souhaite autoriser ce déplacement.

En effet, il convient de « tarer » l'élément déformable pour obtenir cette valeur seuil. Aussi, pour passer d'un véhicule ou environnement à un autre, on définit une nouvelle pièce et surtout un nouvel élément déformable.

La présente invention a pour but de proposer un dispositif de fixation selon l'état de la technique mais dont le tarage est définissable de manière beaucoup plus simple et qui peut en outre être éventuellement réarmé.

A cet effet, l'invention a pour objet un dispositif de fixation d'un élément de façade de refroidissement de véhicule automobile selon la revendication 1.

De manière avantageuse, la seconde extrémité du logement oblong définit une seconde position extrême à laquelle peut venir se loger le pion une fois que celui-ci s'est dégagé de la première position, par exemple lorsque le choc atteint une vitesse de 16 Km/h. Toutefois, pour des vitesses inférieures à 16 Km/h mais qui génèrent une poussée d'amplitude suffisante pour écarter les pattes dans le logement, le pion peut alors se positionner à une seconde position dans le logement oblong qui ne correspondra pas à la seconde position extrême mais à une position intermédiaire entre la première position et la seconde position dite extrême. On obtient ainsi un dispositif de fixation dit fusible mais réarmable.

De manière avantageuse, on obtient ainsi un dispositif de maintien fusible avec lequel le réarmement du dispositif est facilité et donc plus simple. En effet, la forme oblique des pattes de blocage facilite l'effacement de pattes vers les bords et le retour du pion de la seconde position vers la première avec un seuil d'amplitude de l'effort à exercer inférieur.

En outre, lesdites pattes sont constituées d'un élément rapporté sur un support dans lequel est défini le logement. De cette manière la déformation élastique devant survenir dépend uniquement de cet élément rapporté, le support n'a pas besoin d'être lui-même constitué d'un matériau élastiquement déformable. Aussi ce support « standard » est le même pour une pluralité de dispositifs de fixation selon l'invention dont les caractéristiques de fonctionnement seront définies en fonction des caractéristiques des éléments rapportés définissant les pattes.

Un dispositif de fixation selon l'invention est ainsi non seulement réarmable simplement mais en outre plus économique puisqu'à partir d'un support standard en une matière appropriée mais pas nécessairement élastiquement déformable, on peut définir plusieurs dispositifs répondant à des seuils d'amplitude de l'effort de poussée différents.

On décrira maintenant l'invention plus en détails en référence au dessin dans lequel
Les figures 1a à 1d représentent respectivement une vue en perspective du dessus, une vue du dessous, une vue du dessus et une vue de côté d'un plot selon une première forme de réalisation de l'invention ;
Les figures 2a à 2g représentent respectivement une vue de dessous, une vue de côté, une vue du dessus d'un plot selon une variante de la première forme de réalisation ainsi que deux vues de dessus d'un plot monté sur une traverse, une vue en perspective d'un élément monté par lesdits plots et une vue agrandie de cette figure 2f ;
Les figures 3a à 3c représentent respectivement une vue en perspective du dessus, une vue du dessus et une vue en perspective latérale d'un dispositif de fixation ne faisant pas partie de l'invention.

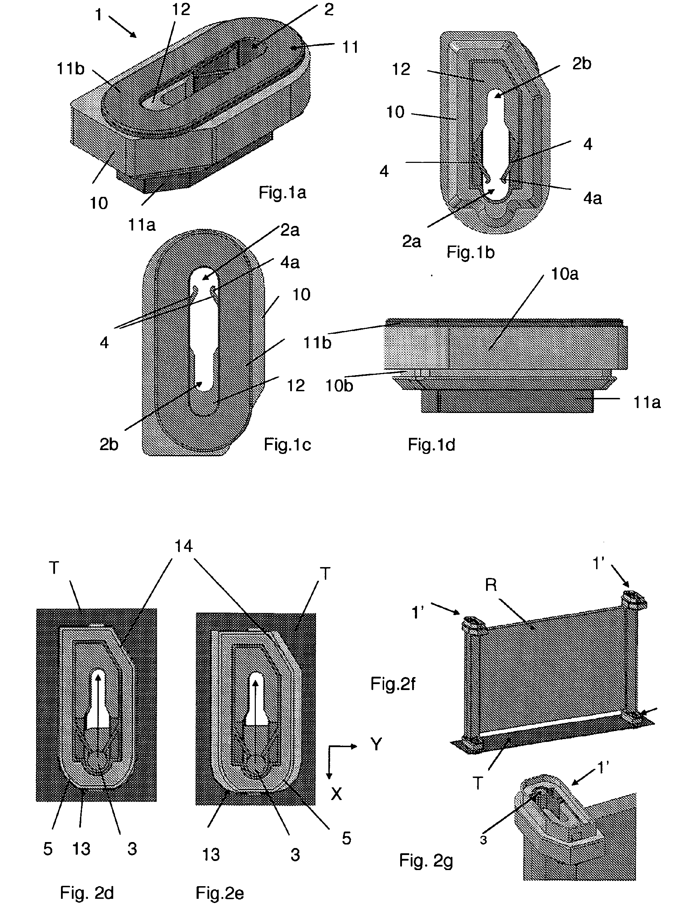

Comme on peut le voir sur les figures 1a à 1d le dispositif de fixation d'un élément de véhicule automobile tel qu'une façade de refroidissement et plus précisément un radiateur R est constitué d'un plot 1 destiné à être monté sur une première pièce telle qu'une traverse T supérieure ou inférieure.

Ce plot 1 comporte un logement 2 oblong destiné à recevoir un pion 3 ménagé en saillie d'une seconde pièce tel qu'un radiateur. Le logement 2 présente ainsi une première position de réception 2a du pion 3 correspondant à des conditions normales de fonctionnement du dispositif et une seconde position 2b, ledit pion 3 étant déplaçable en translation de manière guidée entre la première 2a et la seconde position 2b sous l'effet d'un effort d'amplitude dépassant un seuil déterminé.

La première position 2a est définie entre une extrémité du logement 2 et deux pattes 4 ménagées en saillie dans le logement 2. Ces pattes 4 s'étendent respectivement depuis un bord du logement 2, de manière oblique l'une vers l'autre et leurs extrémités 4a en regard l'une de l'autre forment avec une extrémité du logement 2, la première position 2a.

Les pattes 4 permettent de régler l'effort F de désencliquetage du pion 3. Dès que le pion 3 du radiateur R exerce un effort supérieur à F, le pion 3 pourra reculer.

Les pattes 4 sont alors écartables l'une de l'autre pour s'étendre sensiblement le long des bords du logement 2 et s'effacer pour laisser passer le pion 3 vers la seconde position 2b lorsque le seuil déterminé d'amplitude de l'effort F pour écarter lesdites pattes 4 est exercé et dépassé.

Dans la première forme de réalisation d'un tel plot 1 représentée aux figures 1a à 1d, le plot 1 est constitué d'une première partie de support pour la fixation dudit plot 1 sur un élément tel qu'une traverse T et d'une seconde partie de réception définissant le logement 2 de réception du pion 3.

Ainsi, la partie support du plot 1 est constituée d'un élément 10 en matériau élastiquement déformable se présentant sensiblement sous la forme d'un manchon et présentant sur sa paroi périphérique extérieure 10a des moyens de fixation sur une traverse. Ainsi, ces moyens de fixation peuvent être constitués d'une rainure périphérique 10b permettant l'encliquetage de la partie support 10 dans une lumière ménagée sur une traverse T.

La partie dite de réception du pion 3 est quant à elle constituée d'un insert 11 en matériau plastique qui présente une jupe 11a délimitant une lumière constituant le logement 2 et pourvue d'une collerette 11 b, ledit insert 11 étant propre à venir s'emboîter dans le manchon 10, la collerette 11 b venant en appui sur une face du manchon 10.

Des pattes 4 sont ménagées en saillie depuis les bords de la jupe 11a vers une extrémité du logement 2 pour définir entre les extrémités des pattes 4a et l'extrémité du logement 2, la première position de réception 2a du pion 3.

Dans la lumière de l'insert 11 est également mis en place un élément en forme de U 12 en matériau élastiquement déformable. La base du U 12 est positionnée contre la seconde extrémité de la lumière et définit la seconde position de réception 2b du pion 3.

Les branches du U 12 définissent entre elles un passage de moindres dimensions que la lumière de sorte que la course de recul du pion 3 est amortie et ralentie.

Les extrémités 4a des pattes 4 étant recourbées vers les bords de l'insert 11, lorsqu'un effort est appliqué par le pion 3, cette courbure facilite le glissement du pion 3 et favorise l'écartement des pattes 4 lorsque l'amplitude de l'effort est suffisante. Les pattes 4 s'écartent alors l'une de l'autre et s'effacent vers les bords de la lumière l'insert 11 laissant s'échapper le pion 3 vers la seconde position de réception 2b. Une fois le pion passé, les pattes 4 reviennent l'une contre l'autre et lors d'un réarmement peuvent laisser passer le pion 3 sous l'effet d'un effort moindre.

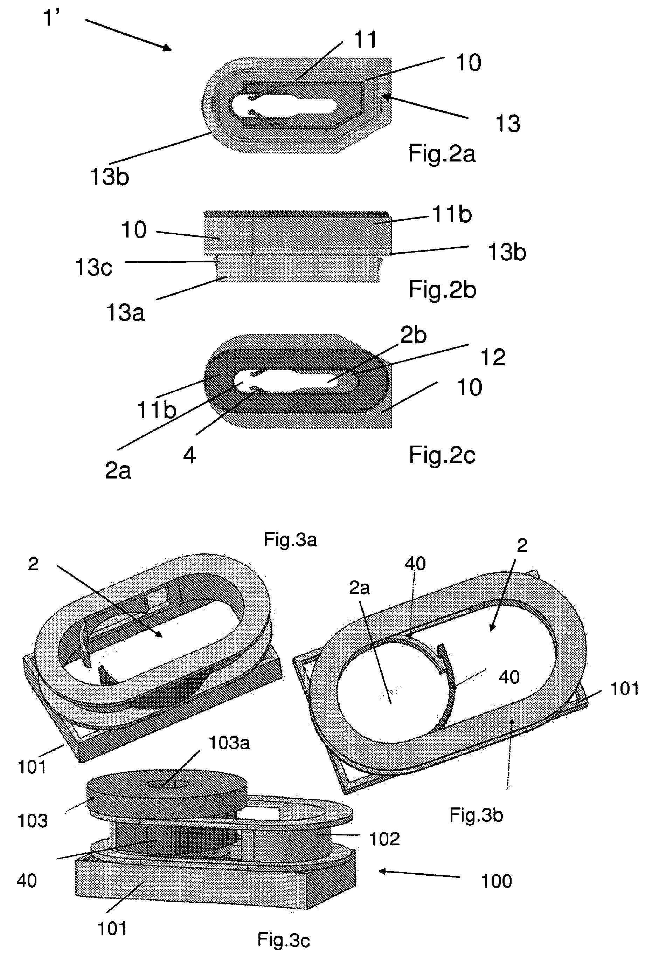

Dans la variante présentée aux figures 2a à 2g, la partie support du plot 1' est constituée de l'élément en matériau élastiquement déformable formant manchon 10 porté par un socle de fixation 13 dudit plot 1 sur une traverse. Ce socle de fixation 13 en matériau rigide est constitué d'une jupe 13a pourvue d'une collerette 13b sur laquelle l'élément 10 est en appui. La lumière du manchon 10 et la lumière définie par la jupe 13a sont identiques. Ce socle de fixation 13 présente à la périphérie extérieure de la jupe 13a des moyens de fixation dudit plot 1 sur une traverse. Ces moyens de fixation peuvent être des ergots 13c permettant l'encliquetage du plot dans un orifice de la traverse par exemple. L'insert 11 est identique à celui précédemment décrit et est emboîté sur la partie support du plot 1' constituée du manchon 10 et du socle de fixation 13.

La partie supérieure de l'insert 11 permet de réaliser un appui plan avec le radiateur R. L'objectif est de permettre le glissement du radiateur R sur cette surface. Le plot doit permettre d'avoir un effort de désencliquetage identique en haut et en bas du radiateur (les 2 plots du bas portent toute la masse de la façade), c'est pour cela qu'il y a une surface plane en pastique.

La partie manchon 10 permet de filtrer la façade de refroidissement qui est amenée à bouger lors de la vie véhicule. Cet élément 10 doit pouvoir limiter le débattement du radiateur par exemple.

La partie de fixation 13 permet au plot de glisser suivant la direction Y (repère véhicule) sur la traverse T. Les deux plots d'un même coté (inférieur et supérieur) seront montés dans un logement faisant la dimension des plots 1'. Ces deux plots 1' feront la fonction de filtrage ce qui correspond à la figure 2d. Les deux plots 1' du coté opposé au précédent seront montés dans un logement reprenant le contour du plot 1' mais agrandi en Y (figure 2e). Ces deux plots 1' pourront alors translater en Y, l'objectif étant de reprendre la dilatation de l'échangeur ici le radiateur R.

L'élément 10 doit en outre permettre le détrompage du plot dans la traverse. Dans l'exemple cité, le détrompage est réalisé par un chanfrein 14 sur un des angles et deux congés 5 sur deux autres angles.

Aux figures 3a à 3d est représentée un autre dispositif de fixation.

Le plot 100 est constitué d'un socle de fixation sur une traverse tel qu'un cadre 101 sur lequel est fixé un second cadre 102 définissant le logement de réception 2 du pion 3. Dans ce cadre 102 est monté mobile en translation d'une extrémité à l'autre un coulisseau 103 en matériau élastiquement déformable pourvu d'un orifice 103a dans lequel se loge le pion 3 sans degré de liberté en translation. Le cadre 102 définissant le logement de réception 2 présente sur ses parois des lumières 104 à l'intérieur desquelles sont fixées mobiles en rotation deux pattes 40 en saillie vers l'intérieur du logement de réception. Ces pattes 40 en forme d'arc de cercle ont leurs extrémités libres en regard l'une de l'autre et qui se rejoignent pour enserrer le coulisseau le maintenant ainsi à une extrémité du logement dans la première position de réception. Ces pattes 40 mobiles en rotation sont écartables l'une de l'autre sous l'effet d'une poussée d'amplitude suffisante pour autoriser le déplacement du coulisseau vers la seconde extrémité du logement c'est-à-dire vers la seconde position de réception.

Bien entendu, la seconde position 2b n'est atteinte par le pion qu'en cas de choc à 16km/h, pour des chocs à des vitesses inférieures, le pion peut se déplacer à une position intermédiaire entre la position 2a et la position 2b.

L'invention n'est bien entendu nullement limitée aux exemples donnés mais englobe toutes les variantes de réalisation possibles dans la portée de l'invention.

## Revendications

1. Dispositif de fixation d'un élément de façade de refroidissement de véhicule automobile tel qu'un radiateur (R), monté sur une première pièce telle qu'une traverse (T) et comportant un logement oblong (2) recevant un pion (3) en saillie d'une seconde pièce tel que le radiateur (R), le logement (2) présentant une première position de réception (2a) du pion (3) correspondant à des conditions normales de fonctionnement du dispositif, la première position (2a) étant définie entre une extrémité du logement (2) et deux pattes (4, 40) ménagées en saillie dans le logement (2), ledit pion (3) étant déplaçable en translation de manière guidée entre la première position (2a) et au moins une seconde position (2b) sous l'effet d'un effort d'amplitude dépassant un seuil déterminé, **caractérisé en ce que** lesdites pattes (4, 40) s'étendent respectivement depuis un bord du logement (2), de manière oblique l'une vers l'autre et leurs extrémités (4a, 40a) en regard l'une de l'autre, en direction de l'extrémité du logement avec laquelle elles forment une première position (2a) de réception du pion (3), lesdites branches (4, 40) étant écartables l'une de l'autre pour s'étendre sensiblement le long des bords du logement (2) pour laisser passer le pion (3) vers la seconde position (2b) lorsque le seuil déterminé d'amplitude de l'effort exercé est dépassé, **en ce que** ledit dispositif se présente sous la forme d'un plot (1) constitué d'une première partie de support constituée d'un élément en matériau élastiquement déformable se présentant sensiblement sous la forme d'un manchon (10) et présentant sur sa paroi périphérique extérieure (10a) des moyens de fixation sur une traverse, cette première partie de support étant pour la fixation dudit plot (1) sur un premier élément tel qu'une traverse (T) et d'une seconde partie de réception définissant le logement (2) de réception du pion (3), la partie dite de réception du pion (3) étant constituée d'un insert (11) en matériau plastique qui présente une jupe (11 a) délimitant une lumière constituant le logement (2) et pourvue d'une collerette (11 b), ledit insert (11) étant propre à venir s'emboîter dans le manchon (10), la collerette (11 b) venant en appui sur une face du manchon (10), les pattes (4) étant ménagées en saillie depuis les bords de la jupe (11a).

2. Dispositif selon la revendication 1, **caractérisé en ce que** l'extrémité (4a) de chaque patte (4) est recourbée vers le bord du logement (2).

3. Dispositif selon la revendication 1, **caractérisé en ce que** les pattes (40) sont en forme d'arc de cercle et ont leurs extrémités libres qui se rejoignent et enserrent le pion le maintenant ainsi à l'extrémité du logement dans la première position de réception et sont montées mobiles en rotation pour s'écarter l'une de l'autre.

4. Dispositif selon l'une des revendications précédentes, **caractérisé en ce que** la partie support du plot (1) est constituée d'un élément (10) en matériau élastiquement déformable se présentant sensiblement sous la forme d'un manchon et présentant sur sa paroi périphérique extérieure (10a) des moyens de fixation sur une traverse (T) tel qu'ne d'une rainure périphérique (10b) permettant l'encliquetage de la partie support (10) dans une lumière ménagée sur une traverse (T).

5. Dispositif selon la revendication 4, **caractérisé en ce que** la partie support du plot (1') est constituée d'un élément en matériau élastiquement déformable formant manchon (10) porté par un socle de fixation (13) dudit plot (1') sur une traverse (T), ledit socle de fixation (13) en matériau rigide étant constitué d'une jupe (13a) pourvue d'une collerette (13b) sur laquelle l'élément (10) est en appui, la lumière du manchon (10) et la lumière définie par la jupe (13a) étant identiques, ledit socle de fixation (13) présentant à la périphérie extérieure de la jupe (13a) des moyens de fixation dudit plot 1 sur une traverse (T).

6. Dispositif selon l'une des revendications précédentes, **caractérisé en ce que**, dans la lumière de l'insert (11) est également mis en place un élément en forme de U (12) en matériau élastiquement déformable, la base du U (12) étant positionnée contre la seconde extrémité de la lumière et définissant la seconde position de réception (2b) du pion (3).

7. Dispositif selon la revendication 6, **caractérisé en ce que** les branches du U (12 définissent entre elles un passage de moindres dimensions que la lumière de sorte que la course de recul du pion (3) est amortie et ralentie.

8. Dispositif selon la revendication 1 ou la revendication 2, **caractérisé en ce qu'**il se présente sous la forme d'un plot (100) constitué d'un socle de fixation sur une traverse tel qu'un cadre (101) sur lequel est fixé un second cadre (102) définissant le logement de réception (2) du pion (3) et dans lequel est monté mobile en translation d'une extrémité à l'autre un coulisseau (103) en matériau élastiquement déformable pourvu d'un orifice (103a) dans lequel se loge le pion (3) sans degré de liberté en translation, ledit cadre (102) présentant sur ses parois des lumières (104) à l'intérieur desquelles sont fixées mobiles en rotation deux pattes (40) en saillie vers l'intérieur du logement de réception (2), et dont les extrémités libres se rejoignent et enserrent le coulisseau (103) le maintenant ainsi à une extrémité du logement (2) dans la première position de réception (2a)

## Patentansprüche

1. Vorrichtung zur Fixierung eines Kühlungselements eines Vorderbaus eines Kraftfahrzeugs wie eines Kühlers (R), der auf ein erstes Stück wie z.B. einen Querträger (T) montiert ist und eine längliche Lagerung (2) umfasst, die einen Stift (3) aufnimmt, der aus einem zweiten Stück wie z.B. dem Kühler (R) vorsteht, wobei die Lagerung (2) eine erste Position zur Aufnahme (2a) des Stifts (3) aufweist, die normalen Betriebsbedingungen der Vorrichtung entspricht, wobei die erste Position (2a) zwischen einem Ende der Lagerung (2) und zwei Laschen (4, 40) definiert ist, die vorspringend in der Lagerung (2) angeordnet sind , wobei der Stift (3) in Translation auf geführte Weise zwischen der ersten Position (2a) und mindestens einer zweiten Position (2b) unter der Einwirkung einer Kraft mit einer Amplitude verschoben werden kann, die eine vorbestimmte Schwelle überschreitet, **dadurch gekennzeichnet, dass** sich die Laschen (4, 40) jeweils von einem Rand der Lagerung (2) schräg zueinander und zu ihren Enden (4a, 40a) einander gegenüberliegend in Richtung des Endes der Lagerung erstrecken, mit dem sie eine erste Position zur Aufnahme (2a) des Stifts (3) bilden, wobei die Laschen (4, 40) voneinander weg bewegt werden können, um sich im Wesentlichen entlang der Ränder der Lagerung (2) zu erstrecken, um den Stift (3) hin zur zweiten Position (2b) verlaufen zu lassen, wenn die festgesetzte Amplitudenschwelle der ausgeübten Kraft überschritten wird, dadurch, dass die Vorrichtung die Form eines Kontakts (1) aufweist, der aus einem ersten Stützteil besteht, der aus einem elastisch verformbaren Material besteht, der im Wesentlichen die Form einer Muffe (10) aufweist und auf seiner äußeren Umfangswand (10a) Mittel zur Befestigung auf einem Querträger umfasst, wobei dieser erste Stützteil für die Befestigung des Kontakts (1) auf einem ersten Element wie z.B. einem Querträger (T) ist, und einem zweiten Aufnahmeteil, der die Aufnahme (2) zur Aufnahme des Stifts (3) definiert, wobei der Teil, bezeichnet als Aufnahmeteil des Stifts (3), aus einem Einsatz (11) aus Plastikmaterial besteht, der einen Mantel (11a) darstellt, der eine Öffnung begrenzt, die die Lagerung (2) darstellt und mit einer Manschette (11 b) versehen ist, wobei der Einsatz (11) geeignet ist, um sich in die Muffe zu schieben, wobei die Manschette (11 b) auf einer Seite der Muffe (10) aufliegt, wobei die Laschen (4) vorspringend von den Rändern des Mantels (11a) angeordnet sind.

2. Vorrichtung nach Anspruch 1, **dadurch gekennzeichnet, dass** das Ende (4a) jeder Lasche (4) hin zum Rand der Lagerung (2) gebogen ist.

3. Vorrichtung nach Anspruch 1, **dadurch gekennzeichnet, dass** die Laschen (40) die Form eines Kreisbogens aufweisen und ihre freien Enden sich wieder vereinigen und den Stift einschließen und ihn so am Ende der Lagerung in der ersten Position zur Aufnahme halten und beweglich in Rotation montiert sind, um sich voneinander zu entfernen.

4. Vorrichtung nach einem der vorhergehenden Ansprüche, **dadurch gekennzeichnet, dass** der Stützteil des Kontakts (1) aus einem Element (10) aus elastisch verformbarem Material besteht, der im Wesentlichen die Form einer Muffe aufweist und auf seiner äußeren Umfangswand (10a) Mittel zur Befestigung auf einem Querträger (T) aufweist, wie z.B. eine Umfangsnut (10b), die das Einrasten des Stützteils (10) in die Öffnung, die auf einem Querträger (T) angebracht ist, ermöglicht.

5. Vorrichtung nach Anspruch 4, **dadurch gekennzeichnet, dass** der Stützteil des Kontakts (1') aus einem Element aus elastisch verformbarem Material besteht, das die Muffe (10) bildet, die von einem Sockel zur Befestigung (13) des Kontakts (1') auf einem Querträger (T) getragen wird, wobei der Sockel zur Befestigung (13) aus einem starren Material aus einem Mantel (13a) besteht, der mit einer Manschette (13b) versehen ist, auf der das Element (10) aufliegt, wobei die Öffnung der Muffe (10) und die Öffnung, die vom Mantel (13a) definiert ist, identisch sind, wobei der Sockel zur Befestigung (13) den äußeren Umfang des Mantels (13a) der Mittel zur Befestigung des Kontakts 1 auf einem Querträger (T) darstellen.

6. Vorrichtung nach einem der vorhergehenden Ansprüche, **dadurch gekennzeichnet, dass** in der Öffnung des Einsatzes (11) auch ein Element in Form eines U (12) aus elastisch verformbarem Material angeordnet ist, wobei die Basis des U (12) gegen das zweite Ende der Öffnung positioniert ist und die zweite Aufnahmeposition (2b) des Stifts (3) definiert.

7. Vorrichtung nach Anspruch 6, **dadurch gekennzeichnet, dass** die Arme des U (12) zwischen sich einen Durchgang mit geringeren Abmessungen als die Öffnung definieren, so dass des Rückzugsweg des Stifts (3) gedämpft und verlangsamt wird.

8. Vorrichtung nach Anspruch 1 oder Anspruch 2, **dadurch gekennzeichnet, dass** sie die Form eines Kontakts (100) aufweist, der aus einem Sockel zur Befestigung auf einem Querträger wie z.B. einen Rahmen (101) besteht, auf dem ein zweiter Rahmen (102) befestigt ist, der die Lagerung zur Aufnahme (2) des Stifts (3) definiert, und in dem beweglich in Translation von einem Ende zu anderen ein Schlitten (103) aus elastisch verformbaren Material montiert ist, der mit einem Loch (103a) versehen ist, in dem der Stift (3) ohne einen Grad an Freiheit in Translation angeordnet ist, wobei der Rahmen (102) auf seinen Wänden Öffnungen (104) aufweist, in deren Inneren beweglich in Rotation zwei Laschen (40) hin zur Innenseite des Lagerung zur Aufnahme (2) vorstehend fixiert sind, und wobei die freien Enden sich wieder vereinigen und den Schlitten (103) einschließen und ihn so an einem Ende der Lagerung (2) in der ersten Position zur Aufnahme (2a) halten.

## Claims

1. Device for fixing a front panel element for cooling a motor vehicle, such as a radiator (R), mounted on a first part such as a cross member (T) and comprising an oblong housing (2) receiving a pin (3) projecting from a second part such as the radiator (R), the housing (2) having a first position (2a) for receiving the pin (3) corresponding to normal operating conditions of the device, the first position (2a) being defined between an end of the housing (2) and two lugs (4, 40) provided projecting in the housing (2), said pin (3) being movable in translation so as to be guided between the first position (2a) and at least a second position (2b) under the effect of a force of a magnitude exceeding a given threshold, **characterised in that** said lugs (4, 40) extend respectively from one edge of the housing (2), obliquely one towards the other and with their ends (4a, 40a) facing each other, in the direction of the end of the housing with which they form a first position (2a) for receiving the pin (3), said arms (4, 40) being separable from each other in order to extend substantially along the edges of the housing (2) in order to allow the pin (3) to pass to the second position (2b) when the given threshold of magnitude of the force exerted is exceeded, **in that** said device is in the form of a stud (1) consisting of a first supporting part consisting of an element made from an elastically deformable material substantially in the form of a sleeve (10) and having, on its external peripheral wall (10a), means for fixing to a cross member, this first supporting part being for fixing said stud (1) on a first element such as a cross member (T) and a second reception part defining the housing (2) receiving the pin (3), the so-called part for receiving the pin (3) consisting of an insert (11) made from plastics material that has a skirt (11a) defining an aperture constituting the housing (2) and provided with a collar (11 b), said insert (11) being able to fit in the sleeve (10), the collar (11 b) coming into abutment on a face of the sleeve (10), the lugs (4) being formed so as to project from the edges of the skirt (11 a).

2. Device according to claim 1, **characterised in that** the end (4a) of each lug (4) is curved towards the edge of the housing (2).

3. Device according to claim 1, **characterised in that** the lugs (40) are in the form of an arc of a circle and have their free ends joining and enclosing the pin, thus holding it at the end of the housing in the first reception position, and are mounted so as to be able to rotate in order to move away from each other.

4. Device according to one of the preceding claims, **characterised in that** the supporting part of stud (1) consists of an element (10) made from elastically deformable material substantially in the form of a sleeve and having, on its external peripheral wall (10a), means for fixing to a cross member (T) such as a peripheral groove (10b) enabling the supporting part (10) to be snapped into an aperture formed on the cross member (T).

5. Device according to claim 4, **characterised in that** the supporting part of the stud (1') consists of an element made from elastically deformable material forming a sleeve (10) carried by a base (13) for fixing said stud (1') on a cross member (T), said fixing base (13) made from rigid material being formed by a skirt (13a) provided with a collar (13b) on which the element (10) is in abutment, the aperture in the sleeve (10) and the aperture defined by the skirt (13a) being identical, said fixing base (13) having, at the external periphery of the skirt (13a), means for fixing said stud 1 on a cross member (T).

6. Device according to one of the preceding claims, **characterised in that**, in the aperture of the insert (11), a U-shaped element (12) made from elastically deformable material is also fitted, the base of the U (12) being positioned against the second end of the aperture and defining the second position (2b) for receiving the pin (3).

7. Device according to claim 6, **characterised in that** the arms of the U (12) define between them a passage of smaller dimensions than the aperture so that the retraction travel of the pin (3) is damped and slowed.

8. Device according to claim 1 or claim 2, **characterised in that** it is in the form of a stud (100) consisting of a base for fixing on a cross member such as a frame (101) on which a second frame (102) defining the housing (2) receiving the pin (3) is fixed and in which there is mounted, so as to be able to move in translation from one end to the other, a slide (103) made from elastically deformable material provided with an orifice (103a) in which the pin (3) is housed without a degree of freedom in translation, said frame (102) having on its walls apertures (104) inside which there are fixed, so as to able to rotate, two lugs (40) projecting towards the inside of the reception housing (2), and the free ends of which join and enclose the slide (103), thus holding it at one end of the housing (2) in the first reception position (2a).
